(19) Europäisches Patentamt
European Patent Office
Office européen des brevets

(11) **EP 2 412 841 B1**

(12) **EUROPEAN PATENT SPECIFICATION**

(45) Date of publication and mention
of the grant of the patent:
**14.11.2018 Bulletin 2018/46**

(21) Application number: **10755804.1**

(22) Date of filing: **24.02.2010**

(51) Int Cl.:
*C22C 38/58* (2006.01)   *C21D 6/00* (2006.01)
*C21D 8/02* (2006.01)   *C22C 38/00* (2006.01)
*C22C 38/02* (2006.01)   *C22C 38/04* (2006.01)
*C22C 38/44* (2006.01)   *C22C 38/48* (2006.01)
*C22C 38/46* (2006.01)

(86) International application number:
**PCT/JP2010/052816**

(87) International publication number:
**WO 2010/110003 (30.09.2010 Gazette 2010/39)**

(54) **AUSTENITIC STAINLESS STEEL**

AUSTENITISCHER EDELSTAHL

ACIER INOXYDABLE AUSTÉNITIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.03.2009 JP 2009078630**

(43) Date of publication of application:
**01.02.2012 Bulletin 2012/05**

(73) Proprietor: **Nippon Steel & Sumitomo Metal Corporation**
**Tokyo 100-8071 (JP)**

(72) Inventors:
• **OSUKI, Takahiro**
**Osaka-shi**
**Osaka 541-0041 (JP)**
• **TAKEDA, Kiyoko**
**Osaka-shi**
**Osaka 541-0041 (JP)**
• **YOKOYAMA, Tetsuo**
**Osaka-shi**
**Osaka 541-0041 (JP)**

(74) Representative: **TBK**
**Bavariaring 4-6**
**80336 München (DE)**

(56) References cited:
EP-A1- 1 645 649   WO-A1-2005/068674
JP-A- 9 184 013   JP-A- 52 108 316
JP-A- 60 224 764   JP-A- 62 287 051
JP-A- S52 108 316   JP-A- S62 287 051
JP-A- 2005 023 343   US-A1- 2008 107 559
US-A1- 2008 308 198

**Description**

## TECHNICAL FIELD

The present invention relates to an austenitic stainless steel. Specifically, the present invention relates to an austenitic stainless steel, having excellent corrosion resistance (in particular, excellent intergranular corrosion resistance), and further having excellent crack insusceptibility in a weld heat affected zone, which can be used as structural members for a nuclear power plant. More specifically, the present invention relates to a SUS310 type austenitic stainless steel having high contents of Cr and Ni, and in particular suitable for structural members used in a high temperature aqueous environment.

## BACKGROUND ART

A SUS310 stainless steel has been used, for example, as the material of structural members for a nuclear power plant and so on, used in a high temperature aqueous environment, because of excellent mechanical properties with good workability, in addition to excellent resistance to corrosion such as intergranular corrosion and general corrosion, compared to those of SUS316 and SUS304 stainless steels. However, when the said SUS310 stainless steel is welded or heated at high temperatures, sometimes a marked intergranular corrosion occurs in the heat affected zone which is produced by welding or by high temperature heating. This phenomenon of the occurrence of intergranular corrosion is called as sensitization, and is caused by the formation of the Cr depleted zone which is poor in corrosion resistance. The above-mentioned Cr depleted zone is formed, in the welding or the heating process, by Cr carbide precipitation at the grain boundaries and a decrease of the Cr concentration there.

In the conventional measure to suppress the said sensitization, a lowering of the C content and fixing of the C in the Ti and/or Nb compounds within the grains have been employed in order to prevent the formation of the Cr depleted zone through Cr carbide precipitation. However, in the case of the said SUS310 stainless steel, the suppression of sensitization still needs more study partly because of its high Cr content.

Austenitic stainless steels having a high Cr content have been disclosed in the Patent Documents 1 to 8, for example.

That is to say, the Patent Document 1 discloses an austenitic stainless steel containing 20 to 30% of Cr, 20 to 30% of Ni and 0.5 to 4% of Mo as a material having excellent stress corrosion cracking resistance in a hot pure water at a temperature of not less than 100°C and at a chloride ion ($Cl^-$) concentration of not more than 10 ppm.

The Patent Document 2 discloses an austenitic stainless steel having high contents of Cr and Ni, which further contains 0.05 to 3.0% of Mo from the viewpoint of corrosion resistance, and one or more elements selected from Ti, Nb, V and Zr each in a range of 0.001 to 1.0% from the viewpoint of forming carbides and ensuring the strength.

The Patent Document 3 discloses an austenitic stainless steel which is excellent in intergranular corrosion resistance and intergranular stress corrosion cracking resistance, and in which the contents of C, Si, P and S are minimized, and Mo and/or Nb is contained.

With regard to the SUS310 stainless steel which has a high Cr content, in a nitric acid environment, intergranular corrosion is caused by P and Zr in the said steel. Therefore, the Patent Document 4 discloses a "method for manufacturing an austenitic stainless steel" in which P is fixed within the grains by the addition of Nb and a special heat treatment.

The Patent Document 5 discloses an austenitic stainless steel in which N and P are reduced to prevent the deterioration of mechanical strength and intergranular corrosion resistance due to neutron irradiation brittleness or neutron irradiation induced segregation.

The Patent Document 6 discloses a SUS310 stainless steel in which in order to improve the insusceptibility to neutron irradiation brittleness, the precipitation of $M_{23}C_6$ at the grain boundaries is actively exploited, and an aging treatment at a temperature of 600 to 750°C is applied after a solid solution heat treatment to actively cause coherent precipitation of $M_{23}C_6$ at the grain boundaries thereby strengthening the said grain boundaries and improving stress corrosion cracking resistance.

The Patent Document 7 discloses an austenitic stainless steel containing, in mass percent, C: 0.030% or less, Si: 0.1% or less Si, Mn: 2.0% or less, P: 0.03% or less, S: 0.002% or less, Ni: 11 to 26%, Cr: 17 to 30%, Mo: 3% or less, N: 0.01% or less, optionally Ca, Mg and O, optionally any one of Zr, B and Hf, and the balance being Fe and unavoidable impurities.

The Patent Document 8 discloses an austenitic stainless steel comprising, in mass percent, C: at most 0.10%, Si: at most 1.0%, Mn: 0.01 to 30%, P: at most 0.040%, S: at most 0.01%, Cr: 15 to 30%, Ni: 5.0 to 30%, sol. Al: at most 0.10%, N: 0.001 to 0.30%, and a balance of Fe and impurities.

On the other hand, the Patent Document 9 discloses a technique of preventing the sensitization of an austenitic stainless steel having a low Cr content.

That is to say, the Patent Document 9 discloses a technique to prevent the sensitization in a SUS316 type stainless steel containing 16 to 18% of Cr and more than 10% to less than 14% of Ni, in which C and N are fixed within the grains by having one or more elements selected from V, Nb and Ti contained therein so as to satisfy the following two formulas: $[0.0013 \leq (V/51) + (Nb/93) + (Ti/48) \leq 0.0025]$ and $[\{(C/12) + (N/14)\} - \{(V/51) + (Nb/93) + (Ti/48)\} \leq 0.0058]$.

CITATION LIST

PATENT DOCUMENTS

Patent Document 1: JP S52-108316 A
Patent Document 2: JP 2005-15896 A
Patent Document 3: JP S62-287051 A
Patent Document 4: JP H05-263131 A
Patent Document 5: JP H08-165545 A
Patent Document 6: WO 99/09229 A1
Patent Document 7: US 2008/308198 A1
Patent Document 8: EP 1 645 649 A1
Patent Document 9: WO 2007/138815 A1

## SUMMARY OF THE INVENTION

### PROBLEMS TO BE SOLVED BY THE INVENTION

In the Patent Document 1 described above, although it is disclosed that Ti, Nb, Ta and so on are contained from the viewpoint of the prevention of sensitization, they are limited only by the absolute quantity, and there is no statement on the correlation with the amount of C. Further, with regard to Mo, since only its content is regulated as the element for enhancing corrosion resistance, and its content is high from the viewpoint of the prevention of sensitization, there is a concern about a decline in the hot workability.

In the Patent Document 2, Ti, Nb, V and Zr are only regarded as the elements that are effective in forming carbides and improving strength, and therefore, no study has been made of the need of controlling the contents of those elements for the prevention of sensitization.

In the Patent Document 3, no study has been made of the control of adequate content of each element in conjunction with not only the prevention of the precipitation of Cr carbides at the grain boundaries but also the reduction of crack susceptibility in the weld heat affected zone.

Furthermore, in the Patent Document 4, no study has been made of the prevention of sensitization.

In the Patent Document 5, while one or more elements selected from Nb, Ti, Zr, Ta, Hf and V, which are carbide-forming elements, are contained by an amount of not more than 1.0% in total in order to maintain corrosion resistance under neutron irradiation, no study has been made of the adequate content of each element in consideration of not only corrosion resistance but also workability.

The technique proposed in the Patent Document 6 is not intended for fixing C within the grains in order to prevent the sensitization.

The technique proposed in the Patent Document 9 is very effective as the measure to prevent the sensitization of the above-mentioned SUS316 type stainless steels. However, the SUS310 stainless steel, which is a higher Cr and higher Ni material compared with the SUS316 type stainless steels, gets sensitized more easily than the said SUS316 type stainless steels. Therefore, the technique proposed in the Patent Document 7 will not necessarily have a sufficient effect on the SUS310 stainless steel.

In view of the above-mentioned state of affairs, an objective of the present invention is to provide an austenitic stainless steel having excellent corrosion resistance, in particular, intergranular corrosion resistance, and further having excellent crack insusceptibility in the weld heat affected zone; and above all, the objective of the present invention is to provide a SUS310 type austenitic stainless steel having high contents of Cr and Ni.

### MEANS FOR SOLVING THE PROBLEMS

In the SUS310 type austenitic stainless steel which has increased Cr and Ni contents of the base material and which has a far more excellent corrosion resistance compared with the SUS316 type stainless steels, the basic technical idea of the present invention lies in the following items (a) and (b);

(a) To prevent intergranular corrosion in the said austenitic stainless steels by suppressing the precipitation of the Cr base carbides at the grain boundaries by causing Cr to precipitate as nitrides within the grains, and thus reducing the amount of dissolved Cr within the grains; and

(b) To control the amount of impurity elements at the grain boundaries in order to suppress the increase of crack susceptibility in the weld heat affected zone due to the increase of the amount of precipitation of the Cr base nitrides.

Generally, in order to suppress the precipitation of the Cr base carbides at the grain boundaries in the austenitic stainless steels, it is conceivable that it is effective to fix C, which serves as the source of carbide formation, as carbides within the grains by combining it with an element having a high affinity with C, such as Nb, V and Ti.

However, in the case where the C content is reduced in order to ensure a high corrosion resistance, it is necessary to include a large amount of elements for fixing C, such as Nb, V, Ti and so on to cause carbides to precipitate within the grains in a stable manner at a temperature higher than the temperature range in which a grain boundary sensitization will occur. Furthermore, in the case mentioned above, carbide precipitation at the grain boundaries may be accelerated depending on the balance between the free energy within the grains and the one at the grain boundaries, resulting in a deterioration of corrosion resistance.

Accordingly, the present inventors have conceived that it is not only possible to prevent the intergranular corrosion by fixing the carbo-nitrides of Nb, V and so on within the grains, thus suppressing the precipitation of the Cr carbides at the grain boundaries, but also possible to obtain a further effect on suppressing the sensitization by increasing the content of N and thereby causing the Cr base nitrides such as Cr(Nb, V)N and/or $Cr_2N$ nitride (in which one or more elements selected from Nb and V are partly dissolved) and so on to be precipitated within the grains.

This is based on the reason that since the solubility of Cr within the grains is reduced by causing the above-mentioned Cr base nitrides to be precipitated at a high temperature, consequently, the amount of precipitation of $M_{23}C_6$, which is dominantly composed of Cr, can be reduced at the grain boundaries in the temperature range of sensitization, thus improving the corrosion resistance.

In addition, it has been found that including Nb and/or V is particularly effective to increase the precipitation temperature of the said Cr(Nb, V)N, CrNbN and CrVN (hereafter, these nitrides are referred to altogether simply as "Cr(Nb, V)N") thereby remarkably improving the effect of corrosion resistance enhancement.

On the other hand, with regard to Ti, although it increases the precipitation of $Cr_2N$, it has no effect on promoting the precipitation of Cr(Nb, V)N, which is stable at the higher temperatures. Therefore, in particular, it is very useful to contain Nb and V.

The present inventors have also studied the effect of Mo in order to ensure the still more excellent corrosion resistance.

That is to say, while Mo is generally added to a stainless steel as an element for enhancing corrosion resistance, it is known that Mo has an effect of suppressing the sensitization, from the fact that the sensitization in the case of the SUS316 steel containing 2.0 to 3.0% of Mo occurs later than that in the case of the SUS304 steel.

Therefore, paying attention to the roles of Nb and V as elements for forming the Cr base nitrides, and Mo as an element for suppressing the sensitization, various studies have been performed on adequate contents to obtain an effect on suppressing the sensitization in the SUS310 type stainless steels containing 24 to 26% of Cr and 19 to 22% of Ni. As a result, the following new finding (a) has been obtained.

(a) When the content of Mo exceeds 0.10%, there is an effect of suppressing the sensitization; however, when the content thereof becomes not less than 0.50%, the action of suppressing the precipitation of Cr(Nb, V)N and $Cr_2N$ nitrides increases instead, and thereby the said enhancement effect of the corrosion resistance saturates. Therefore, in the case of the SUS310 type stainless steels, the content of Mo is preferably set to more than 0.10% to less than 0.50%.

Therefore, by using the SUS310 type stainless steels which contain Mo of the range mentioned above, and in which various amounts of N, Nb and V are contained, several investigations have been performed on the intergranular corrosion resistance and weldability. The results revealed the following items (b) to (d).

(b) By increasing the content of N, and thereafter controlling the upper limit of the contents of N, Nb and V such that the value of Fn1 represented by the following formula:

$$Fn1 = 36Nb + 53V + 15N,$$

wherein each element symbol in the said formula represents the content by mass percent of the element concerned, satisfies [$2.5 \leq Fn1$], a stainless steel having excellent intergranular corrosion resistance can be obtained. This is based on the fact that since the solubility of Cr within the grains is reduced by causing the Cr base nitride such as Cr(Nb, V)N and/or $Cr_2N$ nitride (in which one or more elements selected from Nb and V are partly dissolved) to be precipitated within the grains, as a result, the amount of precipitation of $M_{23}C_6$, which is predominantly composed of Cr, at grain boundaries in the temperature range of sensitization can be reduced.

(c) However, when the contents of Nb, V and N increase and the value of Fn1 becomes excessively large, the precipitation of Cr base nitrides occurs not only within the grains but also at the grain boundaries, thereby resulting in a deterioration of intergranular corrosion resistance. Therefore, the value of Fn1, represented by the formula mentioned above, also have to satisfy [Fn1 ≤ 25.0].

(d) By fixing Cr as nitrides within the grains, the amount of precipitation of $M_{23}C_6$ at the grain boundaries is suppressed and thereby it is possible to improve the intergranular corrosion resistance of the SUS310 type austenitic stainless steels; but, on the other hand, there is a risk that a deterioration of weldability, namely, the crack susceptibility in the weld heat affected zone is significantly increased. That is to say, since the amount of precipitation of the nitrides within the grains increases as the contents of Nb, V and N increase, and accordingly precipitation strengthening progresses within the grains leading to a sharp increase in transgranular strength, there is a risk that an imbalance between the strength within the grains and the one at the grain boundaries occurs, and a crack may occur due to the deterioration of ductility in the weld heat affected zone.

Furthermore, in particular, the inventors also have paid attention to S, P and Sn, which are known as grain boundary-embrittling elements, and carried out a detailed study on their relationship with the contents of Nb, V and N. As a result, the following important findings (e) and (f) have been obtained.

(e) By a proper control of the contents of S, P and Sn in conjunction with the increase of transgranular strength due to the increase in the contents of Nb, V and N, it is possible to ensure the improvement of the intergranular corrosion resistance and the reduction of the crack susceptibility in the weld heat affected zone simultaneously.

(f) In particular, if the value of Fn2 which is represented by the following formula:

$$Fn2 = S + \{(P + Sn) / 2\},$$

wherein each element symbol in the said formula represents the content by mass percent of the element concerned, satisfies [Fn2 ≤ -5.76 × 10$^{-4}$ × Fn1 + 0.0267] depending on the contents of Nb, V and N so as to keep a balance between the strength at the grain boundaries and the one within the grains, it is possible to improve the intergranular corrosion resistance of the austenitic stainless steels and also to surely reduce the crack susceptibility in the weld heat affected zone thereof.

The present invention has been accomplished on the basis of the above-mentioned findings. The main points of the present invention are the austenitic stainless steel defined in claim 1 and, in accordance with claim 5, the use the austenitic stainless steel as a structural member for a nuclear power plant.

The term "impurities" so referred to in the phrase "the balance being Fe and impurities" in claim 1 means substances that are mixed in by various factors of the manufacturing process when the ferrous materials are manufactured in an industrial manner, including a raw material such as ore, scrap and so on.

## EFFECTS OF THE INVENTION

The austenitic stainless steel of the present invention, which is a SUS310 type austenitic stainless steel having high contents of Cr and Ni, has excellent corrosion resistance, in particular, excellent intergranular corrosion resistance; and it also has excellent crack insusceptibility in the weld heat affected zone. Consequently, the said austenitic stainless steel is very suitable to be used as a member, in particular, a structural member for a nuclear power plant where an intergranular corrosion may occur.

## MODES FOR CARRYING OUT THE INVENTION

In the following, the reasons for restricting the chemical compositions of the austenitic stainless steels of the present invention are explained in detail. In the following explanation, the symbol "%" for the content of each element means "% by mass".

C: 0.005 to 0.02%

C (carbon) is used for deoxidizing the steel and ensuring the strength of steel. Therefore, the content of C is set to not less than 0.005%. However, in order to prevent the precipitation of carbides, from the view point of ensuring the corrosion resistance, it is preferable to make the C content as low as possible. Therefore, the content of C is set to not more than 0.02%. The content of C is preferably not more than 0.015%. In the case where the deoxidation and ensuring the strength of steels are considered together with the carbide precipitation, the content of C is more preferably set to not less than 0.005% to not more than 0.010%.

Si: 0.01 to 0.50%

Si (silicon) is used for deoxidation of steel. In the steel of the present invention, the content of Si is set to not less than 0.01%. However, since an excessive Si content encourages forming inclusions, it is preferable to make the Si content as low as possible. Therefore, the content of Si is set to 0.01 to 0.50%. The content of Si is more preferably set to not less than 0.15% to not more than 0.30%.

Mn: 0.01 to 2.0%

Mn (manganese) is effective in deoxidizing the steel and stabilizing the austenitic phase. The said effects are obtained if the content of Mn is not less than 0.01%. On the other hand, Mn forms sulfides with S, and the said sulfides exist as nonmetallic inclusions in the steel. Moreover, when the steel products are welded, Mn preferentially concentrates in the surface of the welds and therefore brings out a deterioration of corrosion resistance in the steel products. Therefore, the content of Mn is set to 0.01 to 2.0%. The content of Mn is preferably not less than 0.30%. The content of Mn is more preferably set to not less than 0.40% to not more than 0.80%.

Cr: 24 to 26%

Cr (chromium) is an indispensable element in order to ensure the corrosion resistance of steels. A sufficient corrosion resistance is not obtained, when the content of Cr is less than 24%. On the other hand, in conceivable use environments of the steel of the present invention, a Cr content of not more than 26% is sufficient. A Cr content of more than 26% leads to the deterioration of workability, and also increases the cost of steels for practical use. Moreover, it makes difficult to keep the austenitic phase stable. Therefore, the content of Cr is set to 24 to 26%.

Ni: 19 to 22%

Ni (nickel) is an important element in order to stabilize the austenitic phase and maintain the corrosion resistance. From the view point of corrosion resistance, a Ni content of not less than 19% is necessary. On the other hand, in the present invention in which the content of Cr is 24 to 26%, when the content of Ni is excessive, in particular at a content level exceeding 22%, it causes a deterioration of the weldability. Therefore, from the view point of the weldability, the upper limit of the Ni content is set to 22%.

Mo: more than 0.10% to less than 0.50%

Mo (molybdenum) has an effect of suppressing the sensitization. The said effect is obtained if the content of Mo is more than 0.10%. However, even if the content of Mo increases to be not less than 0.50%, the above described effect saturates and only the cost increases. Therefore, the content of Mo is set to more than 0.10% to less than 0.50%. The upper limit of the Mo content is preferably set to 0.40%.

N: more than 0.04% to not more than 0.15%

N (nitrogen) is an important element in the present invention. By containing N in the steel, it is possible to enhance the strength of steel. Moreover, an increase of the N content allows the suppression of the sensitization not only by forming carbo-nitrides of Nb and/or V which fix C within the grains, but also by forming nitrides that can fix Cr within the grains. In order to achieve such effects, a content of N of more than 0.04% is necessary. However, if the content of N becomes excessive and in particular when it exceeds 0.15%, the precipitation of Cr nitrides is promoted not only within the grains but also at the grain boundaries; and thus intergranular corrosion resistance deteriorates. Therefore, the content of N is set to more than 0.04% to not more than 0.15%. The lower limit of the N content is preferably 0.05%, and more preferably 0.07%. In addition, the upper limit of the N content is preferably 0.13%.

Nb, V: one or two elements selected from Nb: not more than 0.3% and V: not more than 0.4%

Nb (niobium) and V (vanadium) are also important elements in the present invention. By containing these elements in the steel, it is possible to promote the precipitation of not only carbo-nitrides of Nb and V, but also Cr(Nb, V)N. Thus, it is possible to cause both nitrides of Cr(Nb, V)N and $Cr_2N$ (in which one or more element selected from Nb and V are partly dissolved), to be precipitated within the grains, and to reduce the amounts of C and Cr which dissolved within the grains, thereby suppressing the sensitization.

However, if these elements are excessively contained, specifically, more than 0.3% of Nb and more than 0.4% of V are contained, in either case, not only the precipitation of the Cr base nitrides at grain boundaries may be promoted thereby deteriorating the intergranular corrosion resistance, but also the crack susceptibility in the heat affected zone may be markedly increased. Therefore, the respective contents of Nb and V are not more than 0.3% for Nb and not more than 0.4% for V. In addition, the upper limits of the contents of Nb and V are preferably 0.26% for Nb and 0.35% for V, respectively.

The austenitic stainless steel of the present invention can contain only one or a combination of two of the above-mentioned Nb and V. However, the lower limits of the contents of Nb and V are 0.01% for both of Nb and V when each element is contained solely in the steel in order to achieve the reduction effect of Cr concentration within the grains due to the precipitation of the Cr base nitrides.

In addition, when the austenitic stainless steel of the present invention contains Nb and V in combination, if the total content thereof is more than 0.6%, they may promote the precipitation of the Cr base nitrides at grain boundaries thereby deteriorating the intergranular corrosion resistance; and therefore the upper limit of the total content of the said elements is preferably set to 0.6%.

Moreover, when Nb and V are contained in combination in the austenitic stainless steel of the present invention, the lower limit of the contents of Nb and V is set to 0.01% in the total content.

The austenitic stainless steel according to the present invention consists of the components mentioned above with the balance being Fe and impurities. However, in the present invention, it is necessary to restrict the contents of P, S and Sn among the impurities to not more than the following specified values, respectively.

P: not more than 0.030%

P (phosphorus) is an element contained as an impurity, and if its content increases, and in particular exceeds 0.030%, P causes grain boundary (intergranular) embrittlement and also leads to a deterioration of corrosion resistance. Moreover, the austenitic stainless steel of the present invention is intended for suppressing the grain boundary sensitization by fixing Cr as nitrides mainly within the grains, and therefore, the transgranular strength increases due to the promotion of the precipitation of the nitrides within the grains. In particular when P is contained more than 0.030%, the strength difference from the grain boundaries that are made brittle by the segregation of P increases, and thereby the crack susceptibility in the weld heat affected zone is increased. Therefore, the content of P must be restricted to not more than 0.030%. The content of P is preferably set to not more than 0.020%.

S: not more than 0.002%

S (sulfur) is an element contained as an impurity, and if its content increases, and in particular exceeds 0.002%, S causes a grain boundary embrittlement, and also leads to a deterioration of corrosion resistance. Moreover, the austenitic stainless steel of the present invention is intended for suppressing the grain boundary sensitization by fixing Cr as nitrides mainly within the grains, and therefore, the transgranular strength increases due to the promotion of the precipitation of the nitrides within the grains. In particular, when S is contained more than 0.002%, the strength difference from the grain boundaries that are made brittle by the segregation of S increases, and thereby the crack susceptibility in the weld heat affected zone is increased. Therefore, the content of S must be restricted to not more than 0.002%. The content of S is preferably set to not more than 0.001%.

Sn: not more than 0.015%

Sn (tin) is also an element contained as an impurity, and if its content increases, and in particular exceeds 0.015%, Sn causes a grain boundary embrittlement, and also leads to a deterioration of corrosion resistance. Moreover, the austenitic stainless steel of the present invention is intended for suppressing the grain boundary sensitization by fixing Cr as nitrides mainly within the grains, and therefore, the transgranular strength increases due to the promotion of the precipitation of the nitrides within the grains. In particular, when Sn is contained more than 0.015%, the strength difference from the grain boundaries that are made brittle by the segregation of Sn increases, and thereby the crack susceptibility in the weld heat affected zone is increased. Therefore, the content of Sn must be restricted to not more than 0.015%. The content of Sn is preferably set to not more than 0.010%.

For the austenitic stainless steel of the present invention, the contents of N, and one or two elements selected from Nb and V, and further the contents of P, S and Sn among the impurities must be within the above-mentioned ranges respectively, and the contents of these elements must satisfy the relationships represented by the formulas (1) and (2) mentioned above, that is to say:

$$2.5 \leq Fn1 \leq 25.0 \ldots (1),$$

$$Fn2 \leq \text{-}5.76 \times 10^{-4} \times Fn1 + 0.0267 \ldots (2).$$

Fn1 and Fn2 in the formulas (1) and (2) are the values obtained from the above-mentioned formulas (3) and (4), respectively, that is to say:

$$Fn1 = 36Nb + 53V + 15N \ldots (3),$$

$$Fn2 = S + (P + Sn) / 2 \ldots (4).$$

In the formulas (3) and (4), each element symbol represents the content by mass percent of the element concerned.

For Nb and V, when either one of the elements is contained solely, the value of Fn1 represented by the said formula (3) may be determined with the content of the element that is not to be contained being 0 (zero).

For N, and one or two elements selected from Nb and V, when the value of Fn1 represented by the said formula (3) is lower than 2.5, the effect of decreasing the amount of dissolved Cr within the grains and suppressing the sensitization is not ensured; and therefore, it is not possible to obtain a stainless steel having excellent intergranular corrosion resistance.

On the other hand, when the value of Fn1 exceeds 25.0, since not only the precipitation of the nitrides within the grains, but also the precipitation of the Cr base nitrides at the grain boundaries are caused, the sensitization is rather accelerated thereby leading to a deterioration of the intergranular corrosion resistance.

The lower limit of the value of Fn1 represented by the said formula (3) is preferably 4.0, and more preferably 6.0. The upper limit of the value of Fn1 is preferably 23.0, and more preferably 20.0.

Even if the contents of P, S and Sn are within the ranges which have been described, when the value of Fn2 represented by the said formula (4) exceeds [-5.76 $\times$ 10$^{-4}$ $\times$ Fn1 + 0.0267], the balance between the strength at the grain boundaries and the one within the grains cannot be kept, and the crack insusceptibility in the weld heat affected zone is decreased such that cracks are inevitable.

The value of Fn2 represented by the said formula (4) is preferably as small as possible.

The austenitic stainless steel of the present invention can be produced by selecting the raw materials to be used in the melting step based on the results of careful and detailed analyses so that, in particular, the contents of P, S and Sn among the impurities may fall within the above-mentioned respective ranges, that is to say, P: not more than 0.030%, S: not more than 0.002% and Sn: not more than 0.015% and the value of Fn2 represented by the said formula (4) satisfies the said formula (2), and thereafter melting the raw materials by using an electric furnace, an AOD furnace, a VOD furnace and so on.

The following examples illustrate the present invention more specifically. These examples are, however, by no means limited to the scope of the present invention.

EXAMPLES

Stainless steels having chemical compositions shown in Table 1 were melted and cast to form ingot. Each ingot was hot worked by a hot forging and a hot rolling. As the results, steel plates having a thickness of 14 mm were produced.

Table 1 also shows the values of the right side of the formula (2), that is to say, the values of [-5.76 $\times$ 10$^{-4}$ $\times$ Fn1 + 0.0267].

The steels 1 to 8 shown in Table 1 are steels having chemical compositions which fall within the range regulated by the present invention. On the other hand, the steels A to F are steels of comparative examples in which one or more of the contents of the component elements and the values of Fn1 and Fn2 are out of the ranges regulated by the present invention.

[Table 1]

Table 1

| Steel | Chemical composition (% by mass) Balance: Fe and impurities | | | | | | | | | | | | | | |
| --- | --- | --- | --- | --- | --- | --- | --- | --- | --- | --- | --- | --- | --- | --- | --- |
| | C | Si | Mn | P | S | Ni | Cr | Mo | Nb | V | N | Sn | Fn1 | Fn2 | Right side of the formula (2) |
| 1 | 0.009 | 0.19 | 0.52 | 0.018 | 0.0010 | 19.74 | 24.88 | 0.31 | 0.05 | 0.08 | 0.103 | 0.008 | 7.59 | 0.0140 | 0.0223 |
| 2 | 0.012 | 0.19 | 0.52 | 0.015 | 0.0010 | 19.66 | 24.72 | 0.30 | 0.05 | 0.10 | 0.047 | 0.006 | 7.81 | 0.0115 | 0.0222 |
| 3 | 0.011 | 0.20 | 0.52 | 0.015 | 0.0010 | 19.50 | 24.71 | 0.30 | 0.05 | 0.10 | 0.129 | 0.004 | 9.04 | 0.0105 | 0.0215 |
| 4 | 0.010 | 0.22 | 0.48 | 0.010 | 0.0006 | 21.52 | 24.25 | 0.31 | 0.25 | - | 0.072 | 0.002 | 10.08 | 0.0066 | 0.0209 |
| 5 | 0.009 | 0.21 | 0.51 | 0.011 | 0,0008 | 19.78 | 24.89 | 0.30 | - | 0.28 | 0.082 | 0.003 | 16.07 | 0,0078 | 0.0174 |
| 6 | 0.009 | 0.20 | 0.52 | 0.015 | 0.0007 | 19.64 | 24.74 | 0.30 | 0.05 | 0.10 | 0.081 | 0.004 | 8.32 | 0.0102 | 0.0219 |
| 7 | 0.008 | 0.21 | 0.52 | 0.010 | 0.0006 | 19.75 | 24.90 | 0.31 | 0.10 | 0.10 | 0.078 | 0.004 | 10.07 | 0.0076 | 0.0209 |
| 8 | 0.009 | 0.19 | 0.51 | 0.014 | 0.0010 | 19.88 | 24.58 | 0.30 | 0.05 | 0.10 | 0.079 | 0.005 | 8.29 | 0.0105 | 0.0219 |
| A | 0.013 | 0.22 | 0.51 | 0.025 | 0.0015 | 19.70 | 24.27 | *0.01 | 0.02 | - | 0.089 | 0.006 | * 2.06 | 0.0170 | 0.0255 |
| B | 0.009 | 0.21 | 0.51 | 0.015 | 0.0009 | 19.77 | 24.65 | 0.31 | 0.25 | 0.30 | 0.110 | 0.008 | *26.55 | *0.0124 | 0.0114 |
| C | 0.009 | 0.19 | 0.52 | 0.028 | 0.0019 | 19.68 | 24.71 | 0.31 | 0.15 | 0.15 | 0.108 | 0.012 | 14.97 | *0.0219 | 0.0181 |
| D | 0.012 | 0.19 | 0.51 | 0.028 | 0.0010 | 19.74 | 24.90 | 0.30 | 0.03 | 0.01 | 0.047 | *0.024 | * 2.32 | *0.0270 | 0.0254 |
| E | 0.011 | 0.21 | 0.50 | 0.024 | 0.0010 | 19.63 | 24.45 | * - | 0.02 | 0.10 | 0.082 | 0.005 | 7.25 | 0.0155 | 0.0225 |
| F | 0.007 | 0.22 | 0.52 | 0.025 | 0.0010 | 19.32 | 24.21 | 0.15 | * - | * - | 0.092 | 0.006 | * 1.38 | 0.0165 | 0.0259 |

Fn1 = 36Nb + 53V + 15N

Fn2 = S + {(P + Sn) / 2}

The right side of the formula (2): $[-5.76 \times 10^{-4} \times Fn1 + 0.0267]$

The mark * indicates falling outside the conditions regulated by the present invention.

EP 2 412 841 B1

Next, for each of respective steels, the above-described each steel plate having a thickness of 14 mm was subjected to a solid solution heat treatment at 1100°C, and thereafter processed into restraint weld cracking test specimens with a shape of 60° V-type groove and a butt thickness of 1.5 mm at the butt end and having a thickness of 12 mm, a width of 50 mm and a length of 100 mm by machining.

Each restraint weld cracking test specimen that was obtained as described above was subjected to four side-restrained welding onto a commercial SM400C steel plate (25 mm in thickness, 200 mm in width and 200 mm in length) as standardized in JIS G 3106 (2004) using"DNiCrFe-3" defined in JIS Z 3224 (1999) as a covered electrode.

Next, each steel plate was subjected to primary pass welding in the groove without using a welding material by the TIG welding under a heat input condition of 9 kJ/cm.

Thereafter, the said steel plate was further subjected to multi-layer welding in the groove using "DNiCrFe-3" as a covered electrode under a heat input condition of 19 KJ/cm. During that process, the temperature between passes was kept at not higher than 150°C.

After the said restraint welding, five samples for cross-sectional microstructure observation of the welded joint were taken from each test specimen. The cross-section of each sample was mirror-like polished and thereafter etched, and then subjected to an observation by use of an optical microscope at a magnification of 500 times to determine whether a crack in the weld heat affected zone occurred or not.

The evaluation of the said restraint cracking test was conducted according to the following criteria. That is to say, in the case where at least one crack was recognized in any one of five cross-sections observed was determined to be "not acceptable". On the other hand, in the case where no crack was recognized in all five cross-sections observed was determined to be "acceptable".

The results of the above-mentioned restraint cracking test are shown in Table 2.

In the "restraint cracking test" column of Table 2, the said "acceptable" and "not acceptable" are represented by marks "o" and "x", respectively.

[Table 2]

Table 2

| Division | Test No. | Steel | Restraint cracking test | 10% oxalic acid etching test |
|---|---|---|---|---|
| Inventive examples | 1 | 1 | ○ | B |
| | 2 | 2 | ○ | A-B |
| | 3 | 3 | ○ | A |
| | 4 | 4 | ○ | B |
| | 5 | 5 | ○ | B |
| | 6 | 6 | ○ | B |
| | 7 | 7 | ○ | A |
| | 8 | 8 | ○ | A-B |
| Comparative Examples | 9 | * A | ○ | C |
| | 10 | * B | × | C |
| | 11 | * C | × | B |
| | 12 | * D | × | C |
| | 13 | * E | ○ | C |
| | 14 | * F | ○ | C |
| The evaluation of the 10% oxalic acid etching test is based on the "classification of the state of grain boundaries" specified in JIS G 0671(2003). That is, symbols A, B and C indicate "step structure", "dual structure" and "ditch structure", respectively.<br>The mark * indicates falling outside the conditions regulated by the present invention. | | | | |

In addition, for each of respective steels, the above-mentioned steel plate having a thickness of 14 mm, which was produced by a hot rolling, was reduced in thickness to 4 mm by surface grinding, and the said steel plate was subjected to a solution treatment, in which the steel plate was kept at 1060°C for 30 minutes and thereafter water cooled.

Next, the plates mentioned above were subjected to a sensitization heat treatment, that is to say, they were heated at 700°C for 2 hours and thereafter cooled in air. After the said sensitization heat treatment, the state of intergranular corrosion was investigated according to the 10% oxalic acid etching test, which is a typical test method for evaluating the intergranular corrosion resistance specified in JIS G 0571(2003).

The evaluation of the said 10% oxalic acid etching test was performed according to the table of "classification of the state of grain boundary" in the above-described JIS such that "step structure" of symbol A and "dual structure" of symbol B were regarded as "acceptable", and "ditch structure" of symbol C was regarded as "not acceptable".

The results of the said 10% oxalic acid etching test are also shown in Table 2.

As is apparent from Table 2, all of Test Nos. 1 to 8 that used the steels 1 to 8, which are inventive examples of the present invention, had excellent intergranular corrosion resistance together with excellent crack resistance (excellent crack insusceptibility) in the weld heat affected zone.

On the contrary, Test Nos. 9 to 14 that used the steels A to F, which were comparative examples that deviated from the conditions regulated by the present invention, were poor in either of intergranular corrosion resistance and crack resistance in the weld heat affected zone.

That is to say, in the case of Test No. 9, the content of Mo of the steel A was as low as 0.01% deviating from the condition regulated by the present invention, and further the value of Fn1 was as low as 2.06 also falling short of the lower limit regulated by the present invention so that intergranular corrosion resistance was poor.

In the case of Test No. 10, although the content of each element of the steel B was within the range regulated by the present invention, the value of Fn1 was as high as 26.55 exceeding the upper limit regulated by the present invention, and further the value of Fn2 did not satisfy the formula (2), so that not only the precipitation of nitrides at grain boundaries were promoted resulting in poor intergranular corrosion resistance, but also the crack susceptibility in the weld heat affected zone increased resulting in the occurrence of crack.

In the case of Test No. 11, the content of each element and the value of Fn1 of the steel C were within the range regulated by the present invention so that the intergranular corrosion resistance was acceptable, but the value of Fn2 did not satisfy the formula (2) so that the crack susceptibility in the weld heat affected zone increased resulting in the occurrence of crack.

In the case of Test No. 12, the steel D had an Sn content of as high as 0.024% deviating from the condition regulated by the present invention, and also had a value of Fn1 as low as 2.32 falling short of the lower limit regulated by the present invention. Moreover, the value of Fn2 of the said steel D did not satisfy the formula (2). For this reason, Test No. 12 was poor in both intergranular corrosion resistance and crack resistance in the weld heat affected zone.

In the case of Test No. 13, although the steel E had values of Fn1 and Fn2, both of which were within the range regulated by the present invention, the said steel E did not contain Mo. For this reason, the evaluation of the 10% oxalic acid etching test result was symbol "C", indicating a poor intergranular corrosion resistance.

In the case of Test No. 14, the steel F did contain neither Nb nor V, and besides the value of Fn1 was as low as 1.38 falling short of the lower limit regulated by the present invention, so that intergranular corrosion resistance was poor.

INDUSTRIAL APPLICABILITY

According to the present invention, it is possible to obtain an austenitic stainless steel, which is a SUS310 type austenitic stainless steel having high contents of Cr and Ni, having excellent corrosion resistance, in particular, excellent intergranular corrosion resistance, and further having excellent cracking resistance in the weld heat affected zone. This stainless steel can show excellent effects, when it is used as a material of structural members, in particular, as a material of structural members for a nuclear power plant.

**Claims**

1. An austenitic stainless steel, which consists of by mass percent, C: 0.005 to 0.02%, Si: 0.01 to 0.50%, Mn: 0.01 to 2.0%, Cr: 24 to 26%, Ni: 19 to 22%, Mo: more than 0.10% to less than 0.50%, N: more than 0.04% to not more than 0.15%, and one or two elements selected from Nb: not more than 0.30% and V: not more than 0.40%, with the balance being Fe and impurities, in which the total content of the one or two elements selected from Nb and V is 0.01% or more, the contents of P, S and Sn among the impurities are P: not more than 0.030%, S: not more than 0.002% and Sn: not more than 0.015%, respectively, and the content of each element satisfies relationships represented by the following formulas (1) and (2);

$$2.5 \leq Fn1 \leq 25.0 \ldots (1),$$

$$Fn2 \leq -5.76 \times 10^{-4} \times Fn1 + 0.0267 \ldots (2);$$

wherein Fn1 and Fn2 in the formulas (1) and (2) are the values obtained from the following formulas (3) and (4), respectively, and each element symbol in the formulas (3) and (4) represents the content by mass percent of the element concerned;

$$Fn1 = 36Nb + 53V + 15N \ldots (3),$$

$$Fn2 = S + (P + Sn) / 2 \ldots (4).$$

2. The austenitic stainless steel according to claim 1, wherein the lower limit of the N content is 0.05%.

3. The austenitic stainless steel according to claim 1 or 2, wherein the upper limit of the N content is 0.13%.

4. The austenitic stainless steel according to any one of claims 1 to 3, wherein the lower limit of the value of Fn1 represented by the formula (3) is 4.0.

5. Use of the austenitic stainless steel according to any one of claims 1 to 4 as a structural member for a nuclear power plant.

**Patentansprüche**

1. Austenitischer nicht rostender Stahl, der in Masseprozent besteht aus C: 0,005 bis 0,02%, Si: 0,01 bis 0,50%, Mn: 0,01 bis 2,0%, Cr: 24 bis 26%, Ni: 19 bis 22%, Mo: mehr als 0,10% bis weniger als 0,50%, N: mehr als 0,04% bis nicht mehr als 0,15% und ein oder zwei Elemente gewählt aus Nb: nicht mehr als 0,30% und V: nicht mehr als 0,40%, wobei der Rest Fe und Verunreinigungen sind, in dem der Gesamtgehalt des einen oder der zwei aus Nb und V gewählten Elemente 0,01% oder mehr beträgt, die Gehalte an P, S und Sn unter den Verunreinigungen jeweils P: nicht mehr als 0,030%, S: nicht mehr als 0,002% und Sn: nicht mehr als 0,015% sind und der Gehalt von jedem Element Zusammenhänge erfüllt, die durch die folgenden Formeln (1) und (2) dargestellt werden;

$$2,5 \leq Fn1 \leq 25,0 \ldots (1),$$

$$Fn2 \leq -5,76 \times 10^{-4} \times Fn1 + 0,0267 \ldots (2);$$

wobei Fn1 und Fn2 in den Formeln (1) und (2) jeweils die Werte sind, die anhand der folgenden Formeln (3) und (4) ermittelt werden, und jedes Elementsymbol in den Formeln (3) und (4) den Gehalt in Masseprozent des betroffenen Elements darstellt;

$$Fn1 = 36Nb + 53V + 15N \ldots (3),$$

$$Fn2 = S + (P + Sn) / 2 \ldots (4).$$

2. Austenitischer rostfreier Stahl nach Anspruch 1, wobei die Untergrenze des N-Gehalts 0,05% beträgt.

3. Austenitischer rostfreier Stahl nach Anspruch 1 oder 2, wobei die Obergrenze des N-Gehalts 0,13% beträgt.

4. Austenitischer rostfreier Stahl nach einem der Ansprüche 1 bis 3, wobei die Untergrenze des Werts von Fn1, der durch die Formel (3) dargestellt wird, 4,0 beträgt.

**5.** Verwendung des austenitischen rostfreien Stahls nach einem der Ansprüche 1 bis 4 als ein Strukturbauteil für ein Kernkraftwerk.

**Revendications**

**1.** Acier inoxydable austénitique, qui consiste, en pourcentages en masse, en C : 0,005 à 0,02 %, Si : 0,01 à 0,50 %, Mn : 0,01 à 2,0 %, Cr : 24 à 26 %, Ni : 19 à 22 %, Mo : de plus de 0,10 % à moins de 0,50 %, N : de plus de 0,04 % à au plus 0,15 %, et un ou deux éléments choisis parmi Nb : pas plus de 0,30 % et V : pas plus de 0,40 %, le reste étant du Fe et des impuretés, dans lequel la teneur totale en les uns ou deux éléments choisis parmi Nb et V est de 0,01 % ou plus, les teneurs en P, S et Sn parmi les impuretés sont P : pas plus de 0,030 %, S : pas plus de 0,002 % et Sn : pas plus de 0,015 %, respectivement, et la teneur en chaque élément satisfait aux relations représentées par les formules (1) et (2) suivantes ;

$$2,5 \leq Fn1 \leq 25,0 \ \ldots \ (1),$$

$$Fn2 \leq -5,76 \times 10^{-4} \times Fn1 + 0,0267 \ \ldots \ (2) \ ;$$

où Fn1 et Fn2 dans les formules (1) et (2) sont les valeurs obtenues à partir des formules (3) et (4) qui suivent, respectivement, et chaque symbole d'élément dans les formules (3) et (4) représente la teneur, en pourcentage en masse, de l'élément concerné ;

$$Fn1 = 36Nb + 53V + 15N \ \ldots \ (3),$$

$$Fn2 = S + (P + Sn) \ / \ 2 \ \ldots \ (4).$$

**2.** Acier inoxydable austénitique selon la revendication 1, dans lequel la limite inférieure de la teneur en N est de 0,05 %.

**3.** Acier inoxydable austénitique selon la revendication 1 ou 2, dans lequel la limite supérieure de la teneur en N est de 0,13 %.

**4.** Acier inoxydable austénitique selon l'une quelconque des revendications 1 à 3, dans lequel la limite inférieure de la valeur de Fn1 représentée par la formule (3) est de 4,0.

**5.** Utilisation de l'acier inoxydable austénitique selon l'une quelconque des revendications 1 à 4 en tant qu'élément structurel pour une centrale nucléaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52108316 A
- JP 2005015896 A
- JP S62287051 A
- JP H05263131 A
- JP H08165545 A
- WO 9909229 A1
- US 2008308198 A1
- EP 1645649 A1
- WO 2007138815 A1